# EUROPEAN PATENT APPLICATION

(11) **EP 2 299 347 A1**
(43) Date of publication of application: **23.03.2011**
(21) Application number: 09173549.8
(22) Date of filing: 20.10.2009
(51) Int. Cl.: G06F 1/16, G06F 3/02

(54) **Electronic device with illumination**

(30) Priority: 22.09.2009 TW 98131995
(71) Applicant: Giga-Byte Technology Co., Ltd., Taipei 231 (TW)
(72) Inventor: Ma, Mou-Ming, Taipei County 231 (TW); Liu, Yi-Yuan, Taipei County 231 (TW); Kao, Chien-Chih, Taipei County 231 (TW)
(74) Representative: Schwerbrock, Florian

(57) **Abstract**

An electronic device including a keyboard module and a lighting module disposed above the keyboard module is provided. Multiple light sources of the lighting module protrude out of a surface of the keyboard module and illuminate the keyboard module.

## Description

### BACKGROUND OF THE INVENTION

### 1. Field of the Invention

The present invention relates to an electronic device. More particularly, the present invention relates to an electronic device is convenient for using.

### 2. Description of Related Art

When an electronic device (for example, a notebook computer) is used in the night or at a dark place, a user probably cannot identify keys on a keyboard module due to a dim external environment, which may lead to inconvenience of inputting or to input wrong instructions.

Though, the notebook computer has a display screen, and the display screen can provide a modicum of brightness during displaying, the brightness provided by the display screen is not enough to illuminate the whole keyboard, so that the problems that the user inputs incorrect characters or inputs wrong instructions is still inevitable, which may cause a great inconvenience for the user.

### SUMMARY OF THE INVENTION

The present invention is directed to an electronic device convenient for using.

The present invention provides an electronic device including a keyboard module and a light source module disposed on the keyboard module, wherein a plurality of light sources of the light source module protrudes out of a surface of the keyboard module to illuminate the keyboard module.

In an embodiment of the present invention, the light sources are light-emitting diodes (LEDs).

In an embodiment of the present invention, the keyboard module has a casing, and the casing has the surface.

In an embodiment of the present invention, the light source module includes an assembly part connected to the casing and the light sources, wherein the light sources are disposed on the assembly part.

In an embodiment of the present invention, a cross section of the assembly part has a "Γ" shape, and the assembly part is rotatable relative to the casing, so that the light sources are higher than the surface of the casing.

In an embodiment of the present invention, a cross section of the assembly part has a round shape or a cross section of a part of the assembly part has an arc shape, two ends of the assembly part are pivotally connected to the casing, a part of the round shape or the arc shape protrudes out of the surface of the casing, and the light sources are located at the round shape of the arc shape protruding out of the casing.

In an embodiment of the present invention, the assembly part is a column, and an axial direction of the column is parallel to a normal direction of the casing.

In an embodiment of the present invention, the electronic device further includes a display pivotally connected to the keyboard module, wherein the display is capable of being opened or closed relatively to the keyboard module. Moreover, the display has an accommodating slot disposed correspondingly to the assembly part, and when the display is closed relatively to the keyboard module, the accommodating slot is used to accommodate the assembly part.

According to the above descriptions, the electronic device of the present invention has a light source module located higher than the surface of the keyboard module for illuminating the keyboard module, so that the user can clearly identify the keys on the keyboard module, and therefore the electronic device is convenient for using.

In order to make the aforementioned and other features and advantages of the present invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram illustrating an electronic device according to a first embodiment of the present invention.

FIG. 2 is a cross-sectional view of an electronic device of FIG. 1 along an A-A' line.

FIG. 3 is a schematic diagram illustrating a situation that a light source module of FIG. 2 is accommodated in a casing.

FIG. 4 is a schematic diagram illustrating an electronic device according to a second embodiment of the present invention.

FIG. 5 is a cross-sectional view of a light source module of FIG. 4.

FIG. 6 is a schematic diagram illustrating another embodiment of a light source module.

FIG. 7 is a schematic diagram illustrating an electronic device according to a third embodiment of the present invention.

### DESCRIPTION OF THE EMBODIMENTS

### First embodiment

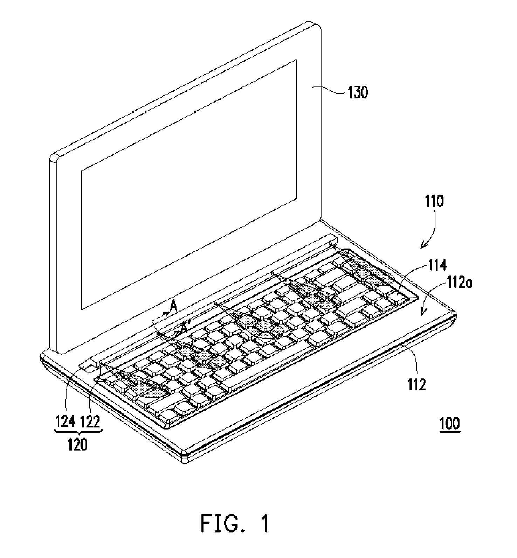

FIG. 1 is a schematic diagram illustrating an electronic device according to a first embodiment of the present invention. Referring to FIG. 1, the electronic device 100 includes a keyboard module 110 and a light source module 120 disposed on the keyboard module 110, wherein a plurality of light sources 122 of the light source module 120 protrudes out of a surface 112a of the keyboard module 110 to illuminate the keyboard module 110.

According to the above description, the keyboard module 110 has a casing 112, and the casing 112 has the surface 112a. The light source module 120 includes an assembly part 124 connected to the casing 112 and the light sources 122, wherein the light sources 122 are disposed on the assembly part 124. In the present embodiment, the light sources 122 are, for example, light-emitting diodes (LEDs), and in other embodiments, the light sources 122 can also be small lamps, organic LEDs or other types of light sources according to an actual design requirement.

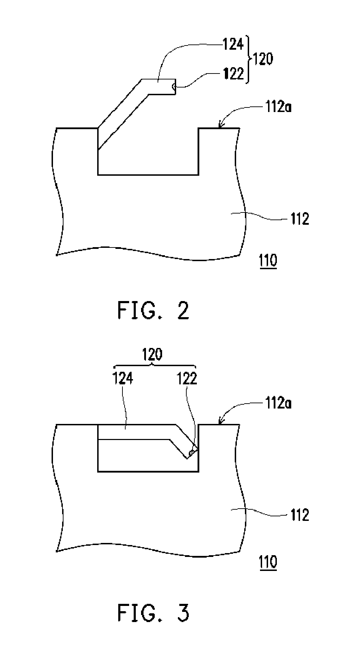

FIG. 2 is a cross-sectional view of the electronic device of FIG. 1 along an A-A' line, and FIG. 3 is a schematic diagram illustrating a situation that the light source module of FIG. 2 is accommodated in the casing. Referring to FIG. 2 and FIG. 3, a cross section of the assembly part 124 has a "Γ" shape. When the user uses the electronic device 100 in an environment bright enough without using the light source module 120, the light source module 120 can be accommodated in the casing 112, and the assembly part 124 may have a color same to that of the surface 112a of the casing 112, so that the light source module 120 accommodated in the casing 112 and the casing 112 are integral in appearance. When the user uses the electronic device 100 in a relatively dim environment, and the light source module 120 is used, the user can rotate the assembly part 124 relatively to the casing 112, so that the light sources 122 can be higher than the surface 112a of the casing 112 and illuminate a plurality of keys 114 on the keyboard module 110. Therefore, the user can clearly identify each of the keys 114, and then the electronic device 100 is convenient to the user for using.

Though in the present embodiment, the cross section of the assembly part 124 has the "Γ" shape, those with ordinary skill in the art can change the shape of the assembly part according to actual demands. For example, the cross section of the assembly part 124 can also be an "L" shape.

Moreover, the electronic device 100 can further includes a display 130, and the display 130 is pivotally connected to the keyboard module 110, so that the display 130 can be opened or closed relatively to the keyboard module 110.

### Second embodiment

An electronic device of the present embodiment is approximately the same to the electronic device of the first embodiment, and the same or alike reference numerals refer to the same or alike elements. Only differences there between are described below.

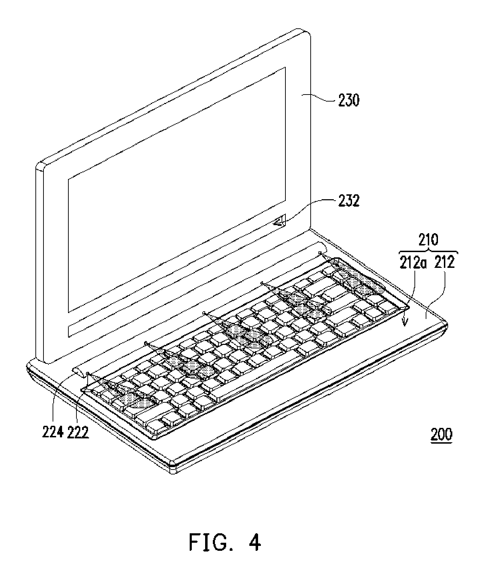

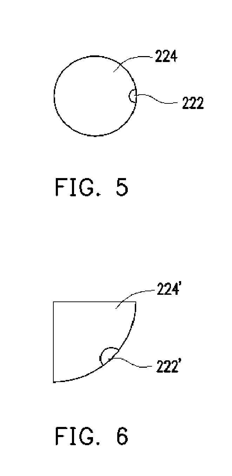

FIG. 4 is a schematic diagram illustrating an electronic device according to a second embodiment of the present invention, and FIG. 5 is a cross-sectional view of a light source module of FIG. 4. Referring to FIG. 4 and FIG. 5, a cross section of an assembly part 224 of the present embodiment has a round shape, and two ends of the assembly part 224 are pivotally connected to a casing 212, and the assembly part 224 can be rotated relatively to the casing 212 via an axle (not shown), wherein a part of the round shape protrudes out of a surface 212a of the casing 212. Light sources 222 are disposed on the assembly part 224. The user can adjust an angle of the light sources 222 relative to the surface 212a of the casing 212 by rotating the assembly part 224 relatively to the casing 212, so as to adjust the light sources 222 to a most suitable usage position.

Moreover, a display 230 of the electronic device 200 further has a accommodating slot 232 disposed correspondingly to the assembly part 224. When the display 230 is closed relatively to the keyboard module 210, the accommodating slot 232 can accommodate the assembly part 224 protruding out of the surface 212a of the casing 212.

FIG. 6 is a schematic diagram illustrating another embodiment of the light source module. Referring to FIG. 6, in such embodiment, a cross section of a part of an assembly part 224' of a light source module 200' can be arc-shaped.

### Third embodiment

An electronic device of the present embodiment is approximately the same to the electronic devices of the first and the second embodiments, and the same or alike reference numerals refer to the same or alike elements. Only differences there between are described below.

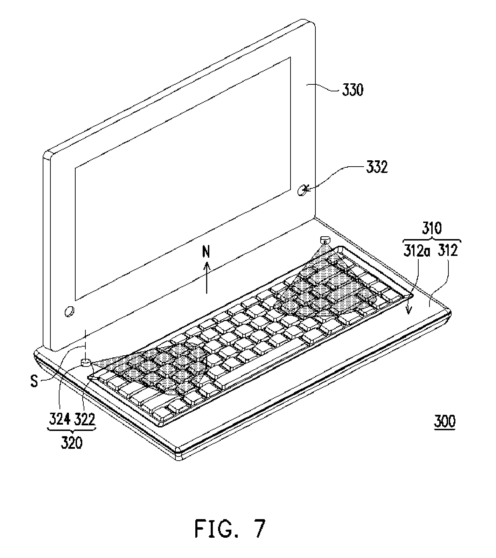

FIG. 7 is a schematic diagram illustrating an electronic device according to a third embodiment of the present invention. In the present embodiment, an assembly part 324 is a column, and an axial direction S of the column is parallel to a normal direction of a casing 312. Moreover, an accommodating slot 332 of a display 330 of the electronic device 300 can accommodate the assembly part 324 when the display 330 is closed relatively to a keyboard module 310.

When the user uses the electronic device 300 in a dim environment, the light sources 322 illuminate the keyboard module 310, so that the user can identify letters on a plurality of keys 314 of the keyboard module 310. Moreover, the assembly part 324 can be turned to the left or right along an axle (not shown), so that an angle between the light sources 322 and the surface 312a of the casing 312 of the keyboard module 310 is adjusted.

In the present embodiment, the accommodating slot 332 is disposed at the display 330 for accommodating the assembly part 324. In the other embodiments, the accommodating slot 332 is not disposed at the display 330, and when the display 330 is closed relatively to the keyboard module 310, the assembly part 324 is pressed by the display 330 and is recessed into the casing 312.

In summary, the electronic device of the present invention has the light source module that can illuminate the keyboard module, so that the user can use the electronic device in a dim environment. Therefore, the electronic device is convenient for using.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An electronic device, comprising:
a keyboard module; and
a light source module, disposed on the keyboard module, wherein a plurality of light sources of the light source module protrudes out of a surface of the keyboard module to illuminate the keyboard module.

2. The electronic device as claimed in claim 1, wherein the light sources are light-emitting diodes (LEDs).

3. The electronic device as claimed in claim 1, wherein the keyboard module has a casing, and the casing has the surface.

4. The electronic device as claimed in claim 3, wherein the light source module comprises:
an assembly part, connected to the casing; and
the light sources, disposed on the assembly part.

5. The electronic device as claimed in claim 4, wherein a cross section of the assembly part has a "Γ" shape, and the assembly part is rotatable relative to the casing, so that the light sources are higher than the surface of the casing.

6. The electronic device as claimed in claim 4, wherein a cross section of the assembly part has a round shape or a cross section of a part of the assembly part has an arc shape, two ends of the assembly part are pivotally connected to the casing, a part of the round shape or the arc shape protrudes out of the surface of the casing, and the light sources are located at the round shape of the arc shape protruding out of the casing.

7. The electronic device as claimed in claim 4, wherein the assembly part is a column, and an axial direction of the column is parallel to a normal direction of the casing.

8. The electronic device as claimed in claim 4, further comprising a display pivotally connected to the keyboard module, and capable of being opened or closed relatively to the keyboard module.

9. The electronic device as claimed in claim 8, wherein the display has an accommodating slot disposed correspondingly to the assembly part, and when the display is closed relatively to the keyboard module, the accommodating slot is used to contain the assembly part.
